Europäisches Patentamt

European Patent Office

Office européen des brevets

(19)

(11) **EP 0 599 529 B1**

(12)

# EUROPEAN PATENT SPECIFICATION

(45) Date of publication and mention
of the grant of the patent:
**10.10.2001 Bulletin 2001/41**

(51) Int Cl.[7]: **H04N 7/24**, H04N 7/32,
H04N 7/26, H04N 7/30,
H04N 7/50, H04N 7/36

(21) Application number: **93309121.7**

(22) Date of filing: **15.11.1993**

(54) **Method and apparatus for picture coding and method and apparatus for picture decoding**

Verfahren und Gerät zur Bildkodierung und Verfahren und Gerät zur Bilddekodierung

Méthode et appareil de codage d'image et méthode et appareil de décodage d'image

(84) Designated Contracting States:
**DE FR GB IT NL**

(30) Priority: **25.11.1992 JP 31481592**

(43) Date of publication of application:
**01.06.1994 Bulletin 1994/22**

(73) Proprietor: **MATSUSHITA ELECTRIC INDUSTRIAL
CO., LTD.**
**Kadoma-shi, Osaka 571-8501 (JP)**

(72) Inventor: **Takahashi, Toshiya**
**Takatsuki-shi, Osaka, 569 (JP)**

(74) Representative: **Crawford, Andrew Birkby et al**
**A.A. Thornton & Co.**
**235 High Holborn**
**London WC1V 7LE (GB)**

(56) References cited:
**EP-A- 0 510 972       WO-A-87/04033**
**US-A- 3 761 613       US-A- 4 217 609**

• **SIGNAL PROCESSING IMAGE
COMMUNICATION., vol. 4, no. 4/5, August 1992
AMSTERDAM NL, pages 379-387, OHTSUKA ET
AL. 'Development of 135 Mbit/s HDTV codec'**
• **PATENT ABSTRACTS OF JAPAN vol. 7 no. 251
(E-209) ,8 November 1983 & JP-A-58 137379
(NIPPON DENKI K.K.) 15 August 1983,**
• **SIGNAL PROCESSING IMAGE
COMMUNICATION., vol. 2, no. 3, October 1990
AMSTERDAM NL, pages 333-341, IRIE ET AL.
'ADAPTIVE SUB-BAND DCT CODING FOR HDTV
SIGNAL TRANSMISSION'**

**Description**

The invention relates to method and apparatus for picture coding and method and apparatus for picture decoding, and more particularly to method and apparatus for picture coding and method and apparatus for picture decoding of high efficiency effective for transmission or recording of digital images.

The transfer rate of digital image reaches hundreds of Mbps to several Gbps, and processing of digital image is restricted by the communication cost at the time of transmission, and limited by the recording capacity of the recording apparatus at the time of recording. It has been accordingly attempted to develop method and apparatus for picture coding capable of minimizing the deterioration of picture quality and lowering the transfer rate at the same time.

As one of such picture coding methods, the motion compensation interframe differential two-dimensional discrete cosine transform (DCT) of the CCIR H.261 standard is described below.

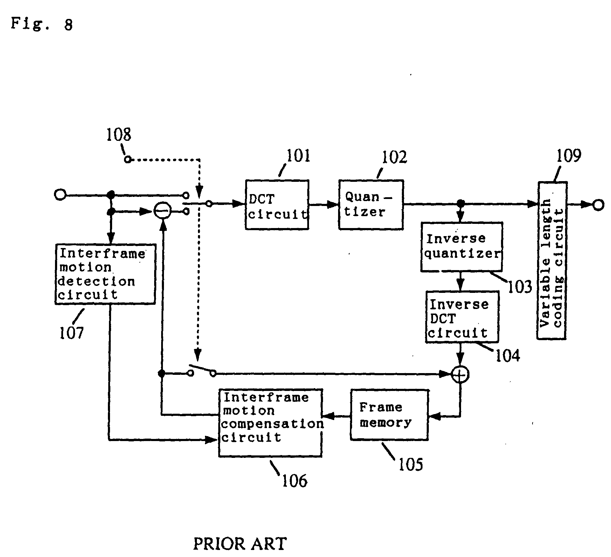

Fig. 8 is a block diagram of motion compensation interframe differential two-dimensional DCT. In Fig. 8, numeral 101 denotes a DCT circuit, 102 is a quantizer, 103 is an inverse quantizer, 104 is an inverse DCT circuit, 105 is a frame memory, 106 is an interframe motion compensation circuit, 107 is an interframe motion detection circuit, 108 is an intraframe/interframe changeover circuit, and 109 is a variable length coding circuit.

In this conventional picture coding apparatus, the operation is as follows.

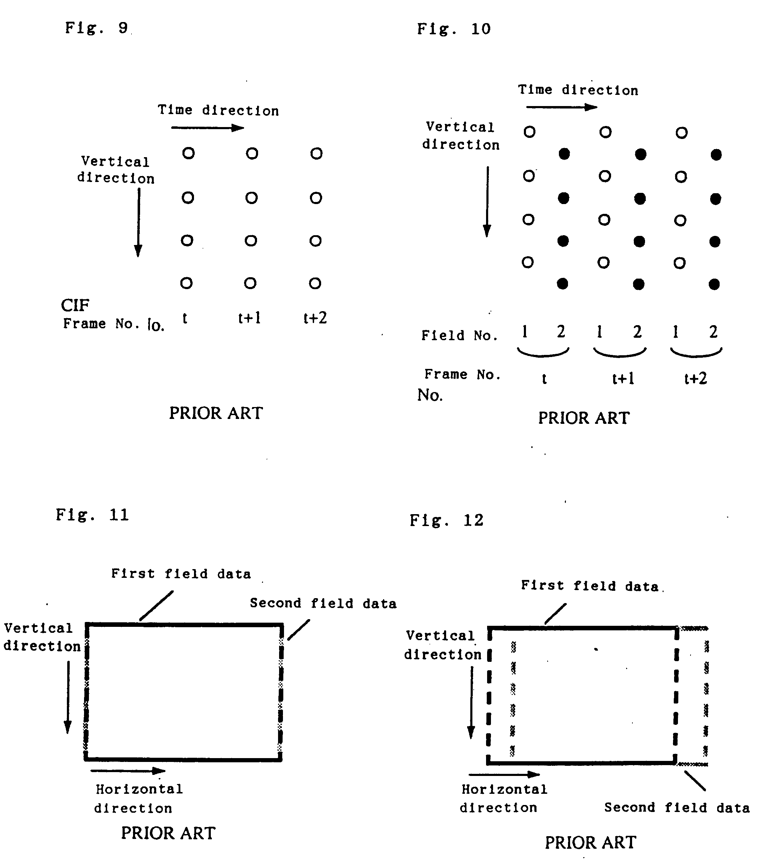

The input is an interlaced image called common intermediate format (CIF). Fig. 9 is a time-space configuration of pixels of input picture, in which the axis of abscissas denotes the time direction and the axis of ordinates represents the vertical direction or the line direction. In the diagram, a set of pixels equal in the time axis is called a CIF frame, and coding is performed in the unit of CIF frame.

The first frame of coding, that is, the picture of frame t is changed over to intraframe coding by an intraframe/interframe changeover signal 108, and is subjected to intraframe coding without considering the difference. That is, the image data is converted into a transform coefficient in the DCT circuit 101 in the unit of two-dimensional block, and the transform coefficient is quantized in the quantizer 102, and is subjected to variable length coding in the variable length coding circuit 109, and is sent out into a transmission route. Generally, the picture is high in correlation, and, as a result of DCT, the energy is concentrated in the transform coefficient corresponding to the low frequency components. Therefore, by quantizing coarsely the high frequency components which are less obvious visually, and finely the low frequency components which are important components, the picture quality deterioration is kept to a minimum, and the quantity of data can be decreased at the same time. The transform coefficient after quantizing is simultaneously returned to the real time data via the inverse quantizer 103 and inverse DCT circuit 104, and accumulated in the frame memory 105.

On the other hand, the pictures after frame (t+1) are subjected to interframe differential coding in each frame. First, in the motion detection circuit 107, by employing, for example, the well-known full search method, the interframe motion vector is determined in every two-dimensional block. The interframe motion compensation circuit 106 generates, making use of the detected motion vector, a predicted value compensating the motion of the next frame in the unit of two-dimensional block. The picture of frame (t+1) is compared with the predicted value generated from frame t in the above method, and the difference or prediction error is calculated. Afterwards, the prediction error is coded in the same manner as in frame t. After frame (t+2), the prediction error is coded in the same manner as in the method of frame (t+1). According to this method, since the prediction error is coded, as compared with the case of directly coding the image data as in the intraframe coding, the energy decreases, and more efficient coding is enabled (for example, refer to CCITT Recommendation H.261, "Codec for audiovisual services at px 64 kbit/s," Geneva, 1990).

In this picture coding method, however, the picture input by interlaced scanning cannot be coded efficiently. The reason is explained by reference to Figs. 10, 11, and 12. The pictures generally used at the present are scanned by interlacing. Fig. 10 is a time-space configuration of pixels of interlaced picture. Figs. 11 and 12 explain examples of display of interlaced picture in frame, without motion in Fig. 11, and with a horizontal motion in Fig. 12.

Pixels are disposed at positions deviated in time in every one vertical line by interlacing. In Fig. 10, a set of pixels equal in the time axis is called a field, and two fields differing in the time axis are put together to form a frame, and one frame is composed of field 1 and field 2. Without motion, as shown in Fig. 11, the frame picture is an image of high vertical correlation. With motion involved, the frame picture is deviated by the amount of interfield motion in every field, that is, in every line as shown in Fig. 12. Therefore, it is efficient to code in the unit of frame in the absence of motion, but in the presence of motion, if coded in the frame unit, a high frequency component in the vertical direction corresponding to the field difference occurs, which causes deterioration of picture quality, and it is hence preferred to employ the conventional image coding method in the field unit. The problem was that the optimum coding method varied depending on the motion, that is, coding in the frame unit in the case of small motion and coding in the field unit in the case of large motion.

An article entitled "Development of 135 Mbit/s HDTV Codec" published in Signal Processing Image Communication vol. 4, no. 415 August 1992 (Ohtouka, et al) describes a proposed coding arrangement. In that arrangement, "there are two coding modes. One is intra-mode for applying DCT to the direct intrafield input blocks. The other is inter-mode, branched to inter-field or interframe mode, for applying DCT to the differential blocks between current and previous fields or current and previous frames, respectively.... The criterion of the mode selection is the sum of the signal energy in the middle and high frequency ranges, and the smaller sum is chosen with the prior decision before coding. The chosen mode is coded and transmitted for each DCT block".

The present invention provides a picture coding method for coding input picture data composed of frames, each frame including two fields, the method comprising the steps of:

calculating for each frame of said input picture data a value ($\alpha$) according to activity in said frame, and comparing each of the values calculated with a predetermined value;

judging whether to encode each frame by frame unit coding or by field unit coding according to a result of said comparing step and generating a signal indicating either said frame unit coding or said field unit coding;

coding the picture data of said frame by said frame unit coding or said field unit coding in accordance with said signal; and

outputting a coded picture signal comprising the encoded frames together with said signal;

wherein said frame unit coding is performed by dividing said frame into a plurality of frame small blocks each being composed of pixels of both of the two fields of said frame and encoding each of said frame small blocks, and said field unit coding is performed by dividing said frame into a plurality of first field small blocks each being composed of pixels of only one of said two fields of said frame and a plurality of second field small blocks each being composed of pixels of only the other of said two fields of said frame and encoding each of said first and second field small blocks.

The present invention also provides a picture coding apparatus for coding input picture data composed of frames, each frame including two fields, the apparatus comprising:

calculating means for calculating for each frame of said input picture data a value according to activity in said frame;

coding judgement means for comparing each of said calculated values with a predetermined value, and judging whether to encode each frame by frame unit coding or by field unit coding according to a result of said comparing step and generating a signal indicating either said frame unit coding or said field unit coding, and

coding means for performing said frame unit coding by dividing a frame into a plurality of frame small blocks each being composed of pixels of both of the two fields of said frame and encoding each of said frame small blocks, and for performing said field unit coding by dividing said frame into a plurality of first field small blocks each being composed of pixels of only one of said two fields of said frame and a plurality of second field small blocks each being composed of pixels of only the other of said two fields of said frame and encoding each of said first and second field small blocks;

said coding means being responsive to said signal to encode each said frame by either said frame unit coding or said field unit coding and outputting a coded picture signal comprising the encoded frames together with said signal.

Correspondingly, the present invention provides a picture decoding method for decoding a coded picture signal which has been produced in a coding process by coding picture data composed of frames, each frame including two fields, the method comprising the steps of:

extracting on a frame by frame basis a signal from said coded picture signal, said extracted signal indicating whether a frame of said coded picture signal has been coded by frame unit coding by dividing said frame into a plurality of frame small blocks each being composed of pixels of both of said two fields included in said frame and encoding each of the frame small blocks, or coded by field unit coding by dividing a frame into a plurality of first field small blocks each being composed of pixels of only one of said two fields included in said frame and a plurality of second field small blocks each being composed of pixels of only the other of said two fields included in said frame and encoding each of the first and second field small blocks; and

decoding each frame of said coded picture signal on a frame by frame basis or on a field by field basis in response to said extracted signal.

The present invention further provides a picture decoding apparatus for decoding a coded picture signal which has been produced in a coding process by coding picture data composed of frames, each frame including two fields, the apparatus comprising:

means for extracting on a frame by frame basis a signal from said coded picture signal, said extracted signal indicating whether a frame of said coded picture signal has been coded by frame unit coding by dividing said frame into a plurality of frame small blocks each being composed of pixels of both of said two fields included in said frame and encoding each of the frame small blocks, or coded by field unit coding by dividing a frame into a plurality of first field small blocks each being composed of pixels of only one of said two fields included in said frame and a plurality of second field small blocks each being composed of pixels of only the other of said two fields included in said frame and encoding each of the first and second field small blocks; and

decoding means for decoding each frame of said coded picture signal on a frame by frame basis or on a field by field basis in response to said extracted signal.

The invention thus presents method and apparatus for picture coding and method and apparatus for its decoding of high efficiency capable of executing optimum coding despite magnitude of motion of picture.

In particular, coding of high efficiency may be realized despite magnitude of motion, by coding in field unit when the motion of picture is large, and coding in frame unit by making use of the vertical correlation of picture when the motion is small.

Further objects and effects of the invention will be better understood and appreciated in the following detailed description.

Fig. 1 is a block diagram of a first embodiment of a picture coding apparatus according to the invention.

Fig. 2 is an explanatory diagram of coding in frame unit and coding in field unit of the invention.

Fig. 3 is a block diagram of activity calculating circuit 1 and frame/field coding judging circuit 2 in Fig. 1.

Fig. 4 is a flow chart showing processing in frame/field coding judging circuit of the invention.

Fig. 5 is a flow chart showing processing in frame/field coding judging circuit in a second embodiment of the invention.

Fig. 6 is a block diagram of a third embodiment of picture coding apparatus according to the invention.

Fig. 7 is a block diagram of an embodiment of a picture decoding apparatus according to the invention.

Fig. 8 is a block diagram of a conventional motion compensation interframe differential two-dimensional DCT.

Fig. 9 is a time-space configuration diagram of pixels of CIF.

Fig. 10 is a time-space configuration diagram of pixels of interlaced picture.

Fig. 11 is an explanatory diagram of frame picture without motion.

Fig. 12 is an explanatory diagram of frame picture with motion.

Referring now to drawings, a first embodiment of method and apparatus for picture coding according to the invention is described below.

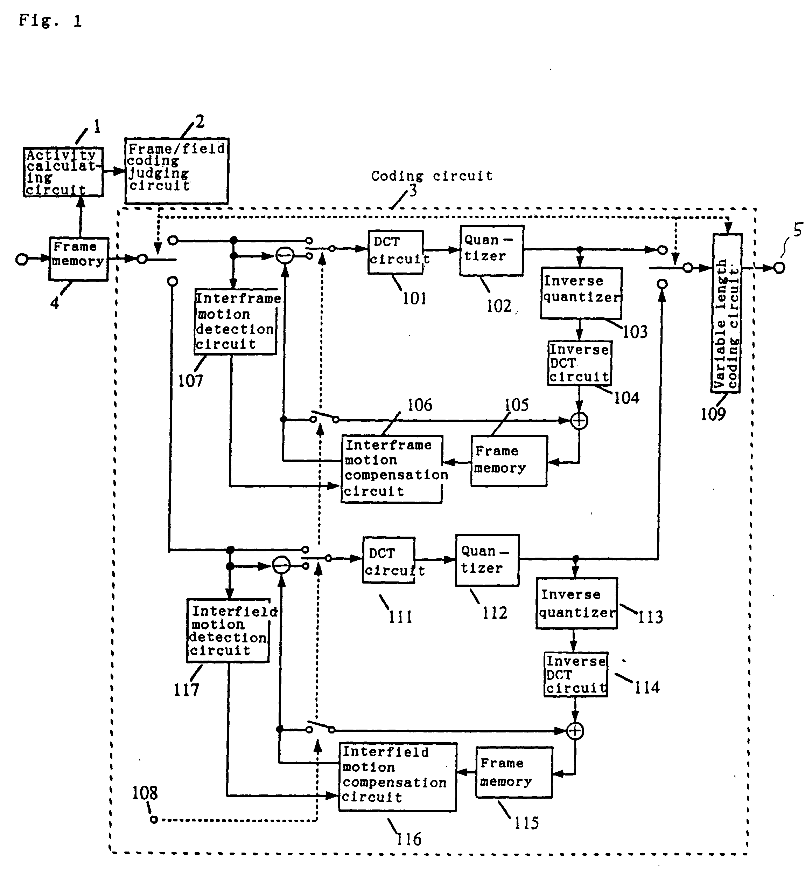

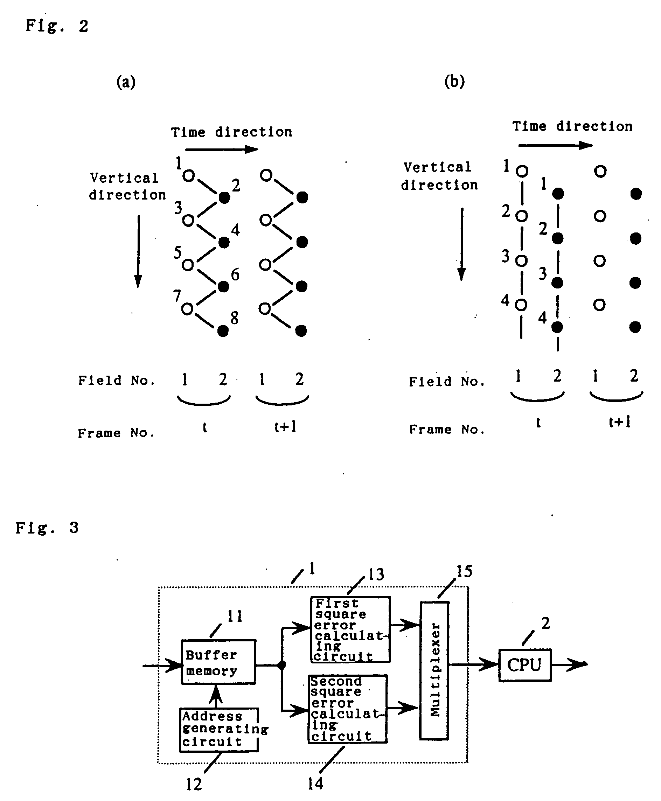

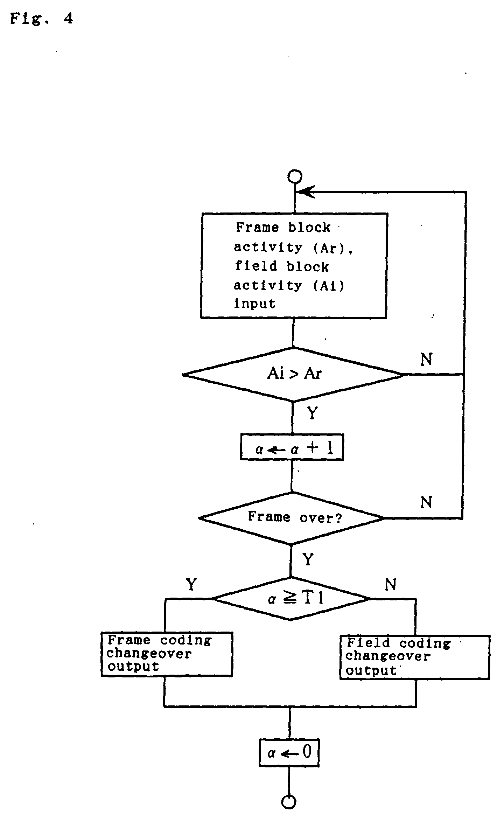

Fig. 1 is a block diagram of a picture coding apparatus according to the first embodiment of the invention, Fig. 2 is an explanatory diagram of coding in frame unit and coding in field unit, Fig. 3 is a block diagram of activity calculating circuit and frame/field coding judging circuit in Fig. 1, and Fig. 4 is a flow chart showing processing in frame/field coding judging circuit 2. In Fig. 1, numeral 1 denotes an activity calculating circuit, 2 is a frame/field coding judging circuit, 3 is a coding circuit, 4 is a frame memory, and 5 is a coded picture output terminal.

The image coding apparatus in Fig. 1 is explained by reference to Figs. 1, 2, 3 and 4.

The input picture in frame unit is stored in the frame memory 4, and at the same time the frame block activity Ar and field block activity Ai are calculated in the activity calculating circuit 1. This activity is calculated, for example, as follows. The input picture is divided into two-dimensional small blocks, and sequentially numbered in the frame unit as shown in Fig. 2 (a), as frame small block Sbr (x,y) (x: horizontal pixel address, $1 \leqq x \leqq 8$, y: vertical pixel address, $1 \leqq y \leqq 8$), and sequentially numbered in the frame unit as shown in Fig. 2 (b), as picture data of field small block Sbi (x,y,n) (x: horizontal pixel address, $1 \leqq x \leqq 8$, y: vertical pixel address, $1 \leqq y \leqq 4$, n: small block address $1 \leqq n \leqq 2$). Consequently, adding the energy sum of interline difference of every line in each block, the frame and field block activities are obtained. They are expressed in the following equations.

[Formula 1]

$$Ar = \sum_{x=1}^{8} \sum_{y=1}^{8,2} ( Sbr(x, y+1) - Sbr(x, y) )^2$$

$$Ai = \sum_{n=1}^{2} \sum_{x=1}^{8} \sum_{y=1}^{4,2} ( Sbi(x, y+1, n) - Sbi(x, y, n) )^2$$

Fig. 3 is an example of activity calculating circuit 1, which comprises a buffer memory 11 for dividing the input picture into two-dimensional small blocks, an address generating circuit 12 for generating its address, first and second square error calculating circuits 13, 14 for calculating square errors or Ar, Ai, and a multiplexer 15 for multiplexing and issuing Ar, Ai.

Thus obtained block activities are fed into the frame/field coding judging circuit 2. In Fig. 3, the frame/field coding judging circuit 2 is composed of central processing unit (CPU). Reference is made to Fig. 4 which shows the operation of the CPU. The input frame activity Ar and field activity Ai are compared in magnitude in every two-dimensional block, and the number $\alpha$ of blocks of Ai>Ar in one frame is calculated. Next, $\alpha$ is compared with an experimentally determined value T1, and if $\alpha \geqq$ T1, a change-over signal showing frame coding is issued, and if $\alpha$ <T1, a changeover signal showing field coding is issued, in every frame.

In the case of small motion, since the correlation of vertical pixels is high, the relation is Ai>Ar. In the case of large motion, to the contrary, the difference between different fields is large, and it is Ai<Ar. Therefore, when T1 is set as 1/2 of the number of blocks in one frame, for example, by comparing Ar and Ai in every block, when the number of blocks $\alpha$ of Ai>Ar occupies the majority in one frame, that frame is judged to be efficient in coding in frame unit. To the contrary, if the number of blocks satisfying Ar>Ai is many, coding in field unit is judged to be appropriate. Herein, coding in frame unit and field unit is coding or decoding in the unit of frame in terms of the time, or in the unit of field, as shown in Fig. 2 (a), (b), respectively. In the frame unit, field 1 and field 2 of time t must be coded and decoded simultaneously, but in the field unit, on the other hand, field 1 and field 2 of time t are coded and decoded at separate times.

The coding circuit 3 employs, for example, a motion compensation interframe differential two-dimensional DCT circuit in the prior art, and a motion compensation inter-field differential two-dimensional DCT circuit applying the prior art in the field unit. The main difference between the motion compensation interframe differential two-dimensional DCT circuit and the motion compensation interfield differential two-dimensional DCT circuit are whether the object of coding is the block in frame unit as shown in Fig. 2 (a) or the block in field unit as shown in Fig. 2 (b), and whether the motion detection and motion compensation are frame interval or field interval. Therefore, the difference in circuit lies only in the motion detection circuits 107, 117, and motion compensation circuits 106, 116.

If the result of judgement by the frame/field coding judging circuit 2 is coding in frame unit, the frame memory 4 issues a frame block. In the coding circuit 3, changing over the switch, the frame unit block is fed into the motion compensation interframe differential two-dimensional DCT circuit, and at the same time, the input of the variable length coding circuit 109 is changed over to the quantizer 102 in the motion compensation interframe differential two-dimensional DCT circuit. In the case of coding in field unit, in the same operation as in the frame unit, the block in the field unit is coded.

The result of judgement by the frame/field coding judging circuit 2 is sent out from the output terminal 5, together with the coded picture signal, through the variable length coding circuit 109.

In this picture coding apparatus, when the interframe correlation is higher than the interfield correlation, it follows that $\alpha \geqq$ T1, and interframe coding is selected, and in the reverse case, the interfield coding is selected, thereby realizing optimum coding adaptively to the magnitude of the motion.

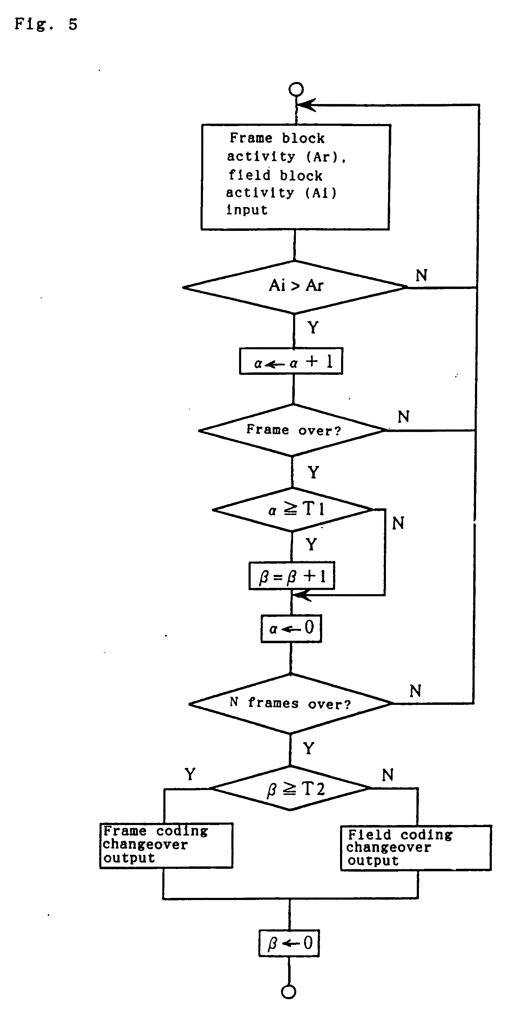

Fig. 5 is a flow chart showing processing in the CPU of the frame/field coding judging circuit 2 in a second embodiment of the invention. What differs from the first embodiment is that the frame coding and field coding are not changed over in every frame, but only once in every N frames. When the number of blocks $\alpha$ of Ai>Ar satisfies the condition of $\alpha \geqq$ T1, the pointer $\beta$ showing how many frames have satisfied $\alpha \geqq$ T1 is added. At the end of N frames, the pointer $\beta$ is compared with an experimentally determined value T2 (for example T2 = N/2), and if $\beta \geqq$ T2, a changeover signal showing frame coding is issued, and if $\beta$<T2, a changeover signal showing field coding is issued.

Usually, in interframe differential coding, in order to prevent error propagation, intraframe coding is inserted in a specific period. In the second embodiment, the period of intraframe coding is regarded as N frames, and the coding in frame unit and coding in field unit are changed over in the intraframe coding period N. Accordingly, changeover of coding occurs only in N frame periods, and the load of the hardware can be alleviated. Besides, if coding in frame unit and in field unit is frequency changed over in every frame, the picture quality may fluctuate, but it is changed over in every N frames in the second embodiment, so that fluctuation of picture quality may be avoided.

In the second embodiment, it is judged by the number of times $\beta$ occurring in N frames, but in order to further avoid fluctuations of picture quality, it may be also possible to set to change over if occurring x times continuously. In usual pictures, it is very rare that a moving part and a slow moving part are changed over in every frame, but a picture continues for several frames or several seconds. Therefore, by setting N = 15, x = 8, that is, by changing over coding in frame unit or coding in field unit when the majority conforms to the condition continuously during 0.5 sec, a sufficient performance is obtained.

In the foregoing embodiments, the block activities Ar, Ai are determined by the difference between the lines, but it is not limitative, and for example, it may be the sum of the AC energy of frame and field blocks. That is, using Sbr, Sbi in the first embodiment, first the mean values of each small block mr, mi(n) are determined. Then, using mean values mr, mi(n), the AC energy of each small block is determined, and the sum of AC energies of small blocks is calculated to obtain Ar, Ai. They are expressed in the following equations.

[Formula 2]

$$mr = \frac{1}{64} \sum_{x=1}^{8} \sum_{y=1}^{8} Sbr(x, y)$$

$$Ar = \sum_{x=1}^{8} \sum_{y=1}^{8} ( Sbr(x, y) - mr )^2$$

$$mi(n) = \frac{1}{32} \sum_{x=1}^{8} \sum_{y=1}^{4} Sbi(x, y, n)$$

$$Ai = \sum_{n=1}^{2} \sum_{x=1}^{8} \sum_{y=1}^{4} ( Sbi(x, y, n) - mi(n) )^2$$

Judgement of coding in frame unit and coding in field unit is done on the basis of the total number of blocks conforming to the conditions by comparing Ai and Ar in each block, but it is not limitative, and the entire picture may be regarded as one block, and comparison of Ai>Ar is determined only once in every frame, and it is judged on the basis of the result, so that same effects may be obtained.

In comparison of block activities Ai, Ar, it is judged at Ai>Ar in the foregoing embodiments, but by adding an offset it is also possible to judge at (Ai + offset) > Ar. Generally, frame unit coding is more efficient than field unit coding, and hence by judging with offset, it is possible to increase the frequency of frame unit coding.

In the first and second embodiments, the initial value of coding may be either frame unit coding or field unit coding, but in general picture, small movements are in majority, and it may be set at frame unit coding.

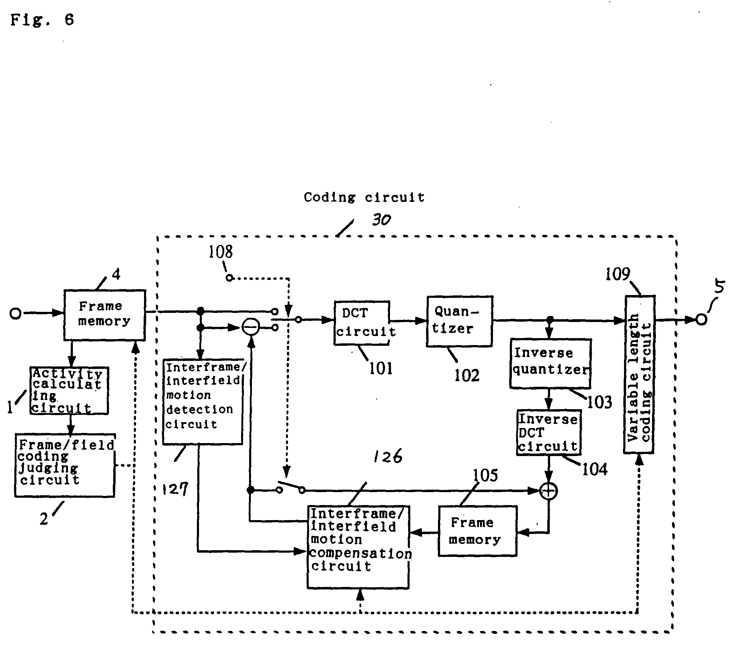

Fig. 6 is a block diagram of a third embodiment of a picture coding apparatus of the invention. What differs from the second embodiment is the constitution of the coding circuit. (In Fig. 6, the coding circuit is indicated by numeral 30.) In the second embodiment, the motion compensation interframe differential two-dimensional DCT circuit and motion compensation interfield differential two-dimensional DCT circuit are changed over by the output of the coding judging circuit 2, but in the third embodiment, the output of the coding judging circuit 2 is fed into an interframe/interfield prediction circuit 126, and it is designed so as to be capable of changing over the motion compensation not only in the block unit but also in the entire picture, so that the coding circuit may be composed of the smaller hardware than in the second embodiment.

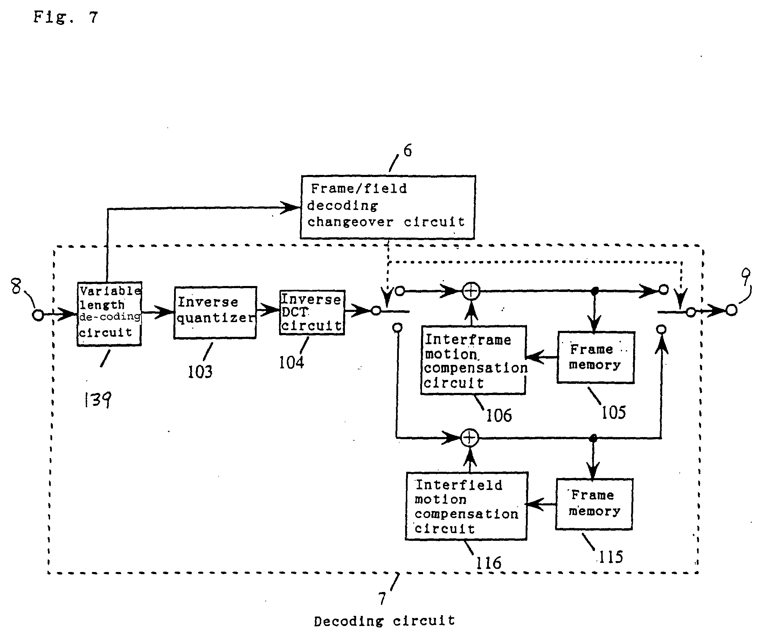

Fig. 7 is a block diagram of an embodiment of picture decoding apparatus of the invention. The apparatus in Fig. 7 comprises a frame/field decoding changeover circuit 6, a decoding circuit 7, a coding image input terminal 8, and a picture output terminal 9, and operates as follows. The coded picture input is fed into a variable length decoding circuit 139 inside the decoding circuit 7, and is separated into the picture data and frame/field coding judging signal. The frame/field decoding changeover circuit 6 receives the frame/field coding judging signal determined by the activity from the variable length decoding circuit 139, and sends the frame/field decoding changeover signal to the decoding circuit 7. The decoding circuit 7 processes the picture data by inverse quantizing and inverse DCT, and compensates the motion in frame unit or field unit depending on the changeover signal in each circuit, reproduces the picture, and issues the decoded picture in frame unit or field unit selected by the changeover signal. Therefore, by the picture decoding apparatus shown in Fig. 7, the picture having being coded by the foregoing embodiments can be decoded.

In the embodiment in Fig. 7, the motion compensation prediction circuit is composed of different circuits in every frame or field, but it is also possible to simplify by using the motion compensation interframe/interfield prediction circuit as shown in Fig. 6.

In these embodiments, as the example of coding circuit, the motion compensation interframe differential DCT circuit is explained, but it is not limitative, and Hadamard transform, Fourier transform, other orthogonal transform circuits, vector quantizing circuits, and any other means having the function of coding the image can be similarly employed.

## Claims

1.  A picture coding method for coding input picture data composed of frames, each frame including two fields, the method comprising the steps of:

calculating for each frame of said input picture data a value ($\alpha$) according to activity in said frame, and comparing each of the values calculated with a predetermined value;

judging whether to encode each frame by frame unit coding or by field unit coding according to a result of said comparing step and generating a signal indicating either said frame unit coding or said field unit coding;

coding the picture data of said frame by said frame unit coding or said field unit coding in accordance with said signal; and

outputting a coded picture signal comprising the encoded frames together with said signal;

wherein said frame unit coding is performed by dividing said frame into a plurality of frame small blocks each being composed of pixels of both of the two fields of said frame and encoding each of said frame small blocks, and said field unit coding is performed by dividing said frame into a plurality of first field small blocks each being composed of pixels of only one of said two fields of said frame and a plurality of second field small blocks each being composed of pixels of only the other of said two fields of said frame and encoding each of said first and second field small blocks.

2. The picture coding method according to claim 1, wherein said judging step judges to change between said frame unit coding of said frames and said field unit coding of said frames when said calculated value either is equal to or greater than or is smaller than said predetermined value in a predetermined number of sequential frames.

3. The picture coding method of claim 1 or 2 in which said judging step judges to perform said frame unit coding when said calculated value is equal to or greater than said predetermined value and to perform said field unit coding when said calculated value is smaller than said predetermined value.

4. The picture coding method according to claim 3, wherein said calculating step comprises the steps of:

dividing each said frame into two-dimensional frame small blocks including pixels of said two fields included in said frame, and into corresponding pairs of two dimensional field small blocks each including pixels of only one or the other of said two fields included in said frame;

calculating a frame block activity value of each of said frame small blocks;

calculating a field block activity value of each of said pairs of field small blocks;

determining for each frame a total ($\alpha$) of the number of said two-dimensional blocks for which said field block activity is greater than said frame block activity value; and

providing said total as said calculated value for said frame.

5. The picture coding method of any of claims 1-4 in which said encoding in said frame unit coding comprises using two-dimensional interframe motion compensation and said encoding in said field unit coding comprises using two-dimensional interfield motion compensation.

6. A picture coding apparatus for coding input picture data composed of frames, each frame including two fields, the apparatus comprising:

calculating means (1) for calculating for each frame of said input picture data a value according to activity in said frame;

coding judgement means (2) for comparing each of said calculated values with a predetermined value, and judging whether to encode each frame by frame unit coding or by field unit coding according to a result of said comparing step and generating a signal indicating either said frame unit coding or said field unit coding, and coding means (3, 30) for performing said frame unit coding by dividing a frame into a plurality of frame small blocks each being composed of pixels of both of the two fields of said frame and encoding each of said frame small blocks, and for performing said field unit coding by dividing said frame into a plurality of first field small blocks each being composed of pixels of only one of said two fields of said frame and a plurality of second field small blocks each being composed of pixels of only the other of said two fields of said frame and encoding each of said first and second field small blocks;

said coding means being responsive to said signal to encode each said frame by either said frame unit coding or said field unit coding and outputting a coded picture signal comprising the encoded frames together with said signal.

7. The picture coding apparatus according to claim 6, wherein said judgement means (2) judges to change between said frame unit coding of said frames and said field unit coding of said frames when said calculated value either is equal to or greater than or is smaller than said predetermined value in a predetermined number of sequential frames.

**8.** The picture coding apparatus according to claim 6 or 7 in which said judgement means judges to perform said frame unit coding when said calculated value is equal to or less than said predetermined values and to perform said field unit coding when said calculated value is smaller than said predetermined value.

**9.** The picture coding apparatus according to claim 8, wherein said calculating means (1) comprises:

means for dividing each said frame into two-dimensional frame small blocks including pixels of said two fields included in said frame, and into corresponding pairs of two dimensional field small blocks each including pixels of only one or the other of said two fields included in said frame;
means for calculating a frame block activity value of each of said frame small blocks, and a field block activity value of each of said pairs of field small blocks;
means for determining for each frame a total ($\alpha$) of the number of said two-dimensional blocks for which said field block activity is greater than said frame block activity value, said total being provided as said calculated value for said frame.

**10.** The picture coding apparatus of any of claims 6-9 in which said encoding performed by said frame unit coding means comprises using two-dimensional interframe motion compensation and said encoding performed by said field unit coding means comprises using two-dimensional interfield motion compensation.

**11.** A picture decoding method for decoding a coded picture signal which has been produced in a coding process by coding picture data composed of frames, each frame including two fields, the method comprising the steps of:

extracting a signal from said coded picture signal, said extracted signal indicating whether the frames of said coded picture signal have been coded by frame unit coding by dividing a frame into a plurality of frame small blocks each being composed of pixels of both of said two fields included in said frame and encoding each of the frame small blocks, or coded by field unit coding by dividing a frame into a plurality of first field small blocks each being composed of pixels of only one of said two fields included in said frame and a plurality of second field small blocks each being composed of pixels of only the other of said two fields included in said frame and encoding each of the first and second field small blocks; and
decoding each frame of said coded picture signal on a frame by frame basis or on a field by field basis in response to said extracted signal.

**12.** A picture decoding apparatus for decoding a coded picture signal which has been produced in a coding process by coding picture data composed of frames, each frame including two fields, the apparatus comprising:

means (139, 6) for extracting a signal from said coded picture signal, said extracted signal indicating whether the frames of said coded picture signal have been coded by frame unit coding by dividing a frame into a plurality of frame small blocks each being composed of pixels of both of said two fields included in said frame and encoding each of the frame small blocks, or coded by field unit coding by dividing a frame into a plurality of first field small blocks each being composed of pixels of only one of said two fields included in said frame and a plurality of second field small blocks each being composed of pixels of only the other of said two fields included in said frame and encoding each of the first and second field small blocks; and
decoding means (7) for decoding each frame of said coded picture signal on a frame by frame basis or on a field by field basis in response to said extracted signal.

**Patentansprüche**

**1.** Bildcodierverfahren zum Codieren von Eingangs-Bild-Daten, zusammengesetzt aus Vollbildern, wobei jedes Vollbild zwei Halbbilder umfaßt, wobei das Verfahren die Schritte aufweist:

Berechnen für jedes Vollbild der Eingangs-Bild-Daten eines Werts ($\alpha$) entsprechend einer Aktivität in dem Vollbild und Vergleichen jedes der Werte, die berechnet sind, mit einem vorbestimmten Wert;
Beurteilen, ob jedes Vollbild durch eine Vollbild-Einheit-Codierung oder durch eine Halbbild-Einheit-Codierung entsprechend einem Ergebnis des Vergleichsschritts zu codieren ist, und Erzeugen eines Signals, das entweder die Vollbild-Einheit-Codierung oder die Halbbild-Einheit-Codierung anzeigt;

Codieren der Bilddaten des Vollbilds durch das Vollbild-Einheit-Codieren oder das Halbbild-Einheit-Codieren entsprechend dem Signal; und

Ausgeben eines codierten Bild-Signals, das die codierten Vollbilder aufweist, zusammen mit dem Signal; wobei das Vollbild-Einheit-Codieren durch Dividieren des Vollbilds in eine Vielzahl von kleinen Vollbild-Blöcken durchgeführt wird, wobei jeder aus Pixeln von beiden der zwei Halbbilder des Vollbilds zusammengesetzt wird, und Codieren jedes der kleinen Vollbild-Blöcke, und wobei das Halbbild-Einheit-Codieren durch Dividieren des Vollbilds in eine Vielzahl von kleinen Blöcken des ersten Halbbilds, wobei jeder aus Pixeln von nur einem der zwei Halbbilder des Vollbilds zusammengesetzt ist, und in eine Vielzahl von kleinen Blöcken des zweiten Halbbilds, wobei jeder aus Pixeln von nur dem anderen der zwei Halbbilder des Vollbilds zusammengesetzt ist, und Codieren jedes der kleinen Blöcke des ersten und des zweiten Halbbilds, durchgeführt wird.

2. Bildcodierverfahren nach Anspruch 1, wobei der Beurteilungsschritt beurteilt, zwischen dem Vollbild-Einheit-Codieren der Vollbilder und dem Halbbild-Einheit-Codieren der Vollbilder umzuändern, wenn der berechnete Wert entweder gleich zu oder größer als oder kleiner als der vorbestimmte Wert in einer vorbestimmten Anzahl von sequentiellen Vollbildern ist.

3. Bildcodierverfahren nach Anspruch 1 oder 2, wobei der Beurteilungsschritt beurteilt, das Vollbild-Einheit-Codieren durchzuführen, wenn der berechnete Wert gleich zu oder größer als der vorbestimmte Wert ist, und das Halbbild-Einheit-Codieren durchzuführen, wenn der berechnete Wert kleiner als der vorbestimmt Wert ist.

4. Bildcodierverfahren nach Anspruch 3, wobei der Berechnungsschritt die Schritte aufweist:

Unterteilen jedes Vollbilds in zweidimensionale, kleine Vollbild-Blöcke, die Pixel der zwei Halbbilder umfassen, die in dem Vollbild enthalten sind, und in entsprechende Paare von zweidimensionalen, kleinen Halbbild-Blöcken, wobei jeder Pixel von nur dem einen oder dem anderen der zwei Halbbilder, die in dem Vollbild umfaßt sind, enthält;

Berechnen eines Vollbild-Block-Aktivität-Werts jedes der kleinen Vollbild-Blöcke;

Berechnen eines Halbbild-Block-Aktivität-Werts jedes der Paare der kleinen Vollbild-Blöcke;

Bestimmen für jedes Vollbild einer Gesamtheit ($\alpha$) der Anzahl der zweidimensionalen Blöcke, für die die Halbbild-Block-Aktivität größer als der Vollbild-Block-Aktivität-Wert ist; und

Liefern der Gesamtheit als den berechneten Wert für das Vollbild.

5. Bildcodierverfahren nach einem der Ansprüche 1 - 4, wobei das Codieren bei der Vollbild-Einheit-Codierung ein Verwenden einer zweidimensionalen Zwischenbild-Bewegungs-Kompensation aufweist und das Codieren in der Halbbild-Einheit-Codierung ein Verwenden einer zweidimensionalen ZwischenHalbbild-Bewegungs-Kompensation aufweist.

6. Bildcodiervorrichtung zum Codieren von Eingangs-Bild-Daten, die aus Vollbildern zusammengesetzt sind, wobei jedes Vollbild zwei Halbbilder umfaßt, wobei die Vorrichtung aufweist:

eine Berechnungseinrichtung (1) zum Berechnen für jedes Vollbild der Eingangs-Bild-Daten eines Werts entsprechend einer Aktivität in dem Vollbild;

eine Codier-Beurteilungs-Einrichtung (2) zum Vergleichen jedes der berechneten Werte mit einem vorbestimmten Wert und zum Beurteilen, ob jedes Vollbild durch eine Vollbild-Einheit-Codierung oder durch eine Halbbild-Einheit-Codierung zu codieren ist, und zwar entsprechend einem Ergebnis des Vergleichsschritts, und Erzeugen eines Signals, das entweder das Vollbild-Einheit-Codieren oder das Halbbild-Einheit-Codieren anzeigt, und eine Codiereinrichtung (3, 30) zum Durchführen des Vollbild-Einheit-Codierens durch Dividieren eines Vollbilds in eine Vielzahl von kleinen Vollbild-Blöcken, von denen jeder aus Pixeln von beiden der zwei Halbbilder des Vollbilds zusammengesetzt ist, und Codieren jedes der kleinen Vollbild-Blöcke, und zum Durchführen der Halbbild-Einheit-Codierung durch Dividieren des Vollbilds in eine Vielzahl von kleinen Blöcken des ersten Halbbilds, von denen jeder aus Pixeln von nur einem der zwei Halbbilder des Vollbilds zusammengesetzt ist, und in eine Vielzahl von kleinen Blöcken des zweiten Halbbilds, von denen jeder aus Pixeln von nur dem anderen der zwei Halbbilder des Vollbilds zusammengesetzt ist; und Codieren jedes der kleinen Blöcke des ersten und des zweiten Halbbilds;

wobei die Codiereinrichtung auf das Signal anspricht, um jedes Vollbild durch entweder das Vollbild-Einheit-Codieren oder das Halbbild-Einheit-Codieren zu codieren, und zum Ausgeben eines codierten Bildsignals, das die codierten Vollbilder besitzt, zusammen mit dem Signal.

7. Bildcodiervorrichtung nach Anspruch 6, wobei die Beurteilungseinrichtung (2) beurteilt, zwischen dem Vollbild-Einheit-Codieren der Vollbilder und dem Halbbild-Einheit-Codieren der Vollbilder umzuändern, wenn der berechnete Wert entweder gleich zu oder größer als oder kleiner als der vorbestimmte Wert in einer vorbestimmten Anzahl von sequentiellen Vollbildern ist.

8. Bildcodiervorrichtung nach Anspruch 6 oder 7, wobei die Beurteilungseinrichtung beurteilt, das Vollbild-Einheit-Codieren durchzuführen, wenn der berechnete Wert gleich zu oder geringer als die vorbestimmten Werte ist, und um das Halbbild-Einheit-Codieren durchzuführen, wenn der berechnete Wert kleiner als der vorbestimmt Wert ist.

9. Bildcodiervorrichtung nach Anspruch 8, wobei die Berechnungseinrichtung (1) aufweist:

eine Einrichtung zum Unterteilen jedes Vollbilds in kleine Blöcke eines zweidimensionalen Vollbilds, umfassend Pixel der zwei Halbbilder, die in dem Vollbild enthalten sind, und in entsprechende Paare von kleinen Blöcken des zweidimensionalen Halbbilds, wobei jeder Pixel von nur dem einen oder dem anderen der zwei Halbbilder, die in dem Vollbild umfaßt sind, enthält;
eine Einrichtung zum Berechnen eines Vollbild-Block-Aktivität-Werts jedes der kleinen Blöcke des Vollbilds und eines Halbbild-Block-Aktivität-Werts für jedes der Paare der kleinen Blöcke des Halbbilds;
eine Einrichtung zum Bestimmen für jedes Vollbild einer Gesamtheit ($\alpha$) der Anzahl der zweidimensionalen Blöcke, für die die Halbbild-Block-Aktivität größer als der Vollbild-Block-Aktivität-Wert ist, wobei die Gesamtheit als der berechnete Wert für das Vollbild geliefert wird.

10. Bildcodiervorrichtung nach einem der Ansprüche 6 - 9, wobei die Codierung, durchgeführt durch die Vollbild-Einheit-Codiereinrichtung, die Verwendung einer zweidimensionalen Zwischenbild-Bewegungs-Kompensation aufweist, und die Codierung, die durch die Halbbild-Einheit-Codiereinrichtung durchgeführt wird, die Verwendung einer zweidimensionalen ZwischenHalbbild-Bewegungs-Kompensation aufweist.

11. Bilddecodierverfahren zum Decodieren eines codierten Bildsignals, das in einem Codiervorgang durch Codieren von Bilddaten, zusammengesetzt aus Vollbildern, erzeugt worden ist, wobei jedes Vollbild zwei Halbbilder umfaßt, wobei das Verfahren die Schritte aufweist:

Extrahieren eines Signals von dem codierten Bildsignal, wobei das extrahierte Signal anzeigt, ob die Vollbilder des codierten Bildsignals durch eine Vollbild-Einheit-Codierung durch Dividieren eines Vollbilds in eine Vielzahl von kleinen Blöcken des Vollbilds codiert worden ist, wobei jedes aus Pixeln beider der zwei Halbbilder zusammengesetzt wird, die in dem Vollbild umfaßt sind, und Codieren jedes der kleinen Blöcke des Vollbilds, oder codiert durch eine Halbbild-Einheit-Codierung durch Dividieren eines Vollbilds in eine Vielzahl von kleinen Blöcken des ersten Halbbilds, wobei jeder aus Pixeln von nur einem der zwei Halbbilder zusammengesetzt ist, die in dem Vollbild umfaßt sind, und in eine Vielzahl von kleinen Blöcken des zweiten Halbbilds, wobei jeder aus Pixeln von nur dem anderen der zwei Halbbilder zusammengesetzt ist, die in dem Vollbild umfaßt sind, und Codieren jedes kleinen Blocks des ersten und des zweiten Halbbilds; und
Decodieren jedes Vollbilds des codierten Bildsignals auf einer Basis Vollbild für Vollbild oder auf einer Basis Halbbild für Halbbild in Abhängigkeit des extrahierten Signals.

12. Bilddecodier-Vorrichtung zum Decodieren eines codierten Bildsignals, das in einem Codier-Vorgang durch Codieren von Bilddaten, die aus Vollbildern zusammengesetzt sind, erzeugt worden ist, wobei jedes Vollbild zwei Halbbilder umfaßt, wobei die Vorrichtung aufweist:

Einrichtungen (139, 6) zum Extrahieren eines Signals von dem codierten Bildsignal, wobei das extrahierte Signal anzeigt, ob die Vollbilder des codierten Bildsignals durch eine Vollbild-Einheit-Codierung durch Dividieren eines Vollbilds in eine Vielzahl von kleinen Blöcken des Vollbilds codiert worden ist, wobei jeder aus Pixeln von beiden der zwei Halbbilder zusammengesetzt sind, die in dem Vollbild umfaßt sind, und Codieren jedes der kleinen Blöcke des Vollbilds, oder codiert durch eine Halbbild-Einheit-Codierung durch Dividieren eines Vollbilds in eine Vielzahl von kleinen Blöcken des ersten Halbbilds, wobei jeder aus Pixeln von nur einem der zwei Halbbilder zusammengesetzt ist, die in dem Vollbild umfaßt sind, und in eine Vielzahl von kleinen Blöcken des zweiten Halbbilds, wobei jeder aus Pixeln nur des anderen der zwei Halbbilder zusammengesetzt ist, die in dem Vollbild umfaßt sind, und Codieren jedes der kleinen Blöcke des ersten und des zweiten Halbbilds; und

eine Decodiereinrichtung (7) zum Decodieren jedes Vollbilds des codierten Bildsignals auf einer Basis Vollbild für Vollbild oder auf einer Basis Halbbild für Halbbild in Abhängigkeit des extrahierten Signals.

**Revendications**

1. Procédé de codage d'image destiné à coder des données d'image d'entrée composées de trames, chaque trame comprenant deux balayages de trame, le procédé comprenant les étapes consistant à :

   calculer pour chaque trame desdites données d'image d'entrée, une valeur ($\alpha$) selon une activité dans ladite trame, et comparer chacune des valeurs calculées à une valeur prédéterminée,
   évaluer s'il faut coder chaque trame par un codage par unité d'une trame ou par un codage par unité d'un balayage de trame conformément à un résultat de ladite étape de comparaison et générer un signal indiquant soit ledit codage par unité d'une trame, soit ledit codage par unité d'un balayage de trame,
   coder les données d'image de ladite trame grâce audit codage par unité d'une trame ou audit codage par unité d'un balayage de trame conformément audit signal, et
   fournir en sortie un signal d'image codé comprenant les trames codées de même que ledit signal,
   dans lequel ledit codage par unité d'une trame est exécuté en divisant ladite trame en une pluralité de petits blocs de trame, chacun étant composé de pixels à la fois des deux balayages de trame de ladite trame et coder chacun desdits petits blocs de trame, et ledit codage par unité d'un balayage de trame est exécuté en divisant ladite trame en une pluralité de premiers petits blocs de balayage de trame, chacun étant composé de pixels d'un seul desdits deux balayages de trame de ladite trame et une pluralité de seconds petits blocs de balayage de trame, chacun étant composé de pixels, uniquement de l'autre desdits deux balayages de trame de ladite trame et coder chacun desdits premiers et seconds petits blocs de balayage de trame.

2. Procédé de codage d'image selon la revendication 1, dans lequel ladite étape d'évaluation évalue un basculement entre ledit codage par unité d'une trame desdites trames et ledit codage par unité d'un balayage de trame desdites trames lorsque ladite valeur calculée est soit supérieure ou égale, soit plus petite que ladite valeur prédéterminée dans un nombre prédéterminé de trames séquentielles.

3. Procédé de codage d'image selon la revendication 1 ou 2, dans lequel ladite étape d'évaluation effectue une évaluation pour exécuter ledit codage par unité d'une trame lorsque ladite valeur calculée est supérieure ou égale à ladite valeur prédéterminée et pour exécuter ledit codage par unité d'un balayage de trame lorsque ladite valeur calculée est plus petite que ladite valeur prédéterminée.

4. Procédé de codage d'image selon la revendication 3, dans lequel ladite étape de calcul comprend les étapes consistant à :

   diviser chaque dite trame en des petits blocs de trame à deux dimensions comprenant des pixels desdits deux balayages de trame inclus dans ladite trame, et en des paires correspondantes de petits blocs de balayage de trame à deux dimensions comprenant chacun des pixels de l'un ou de l'autre desdits deux balayages de trame inclus dans ladite trame,
   calculer une valeur d'activité de bloc de trame de chacun desdits petits blocs de trame,
   calculer une valeur d'activité de bloc de balayage de trame de chacune desdites paires de petits blocs de balayage de trame,
   déterminer pour chaque trame un total ($\alpha$) du nombre desdits blocs à deux dimensions pour lesquels ladite activité de bloc de balayage de trame est supérieure à ladite valeur d'activité de bloc de trame, et
   fournir ledit total en tant que ladite valeur calculée pour ladite trame.

5. Procédé de codage d'image selon l'une quelconque des revendications 1 à 4, dans lequel ledit codage pour ledit codage par unité d'une trame comprend l'utilisation d'une compensation du mouvement inter-trames à deux dimensions et au cours dudit codage par unité d'un balayage de trame, comprend l'utilisation d'une compensation du mouvement inter-balayages de trame à deux dimensions.

6. Appareil de codage d'image destiné à coder des données d'image en entrée composées de trames, chaque trame comprenant deux balayages de trame, l'appareil comprenant :

   un moyen de calcul (1) destiné à calculer pour chaque trame desdites données d'image en entrée une valeur conforme à une activité dans ladite trame,

un moyen d'évaluation de codage (2) destiné à comparer chacune desdites valeurs calculées à une valeur prédéterminée, et à évaluer s'il faut coder chaque trame par un codage par unité d'une trame ou par un codage par unité d'un balayage de trame conformément à un résultat de ladite étape de comparaison et générer un signal indiquant soit ledit codage par unité d'une trame, soit ledit codage par unité d'un balayage de trame, et un moyen de codage (3, 30) destiné à exécuter ledit codage par unité d'une trame en divisant une trame en une pluralité de petits blocs de trame, chacun étant composé de pixels à la fois des deux balayages de trame de ladite trame, et coder chacun desdits petits blocs de trame, et destiné à exécuter ledit codage par unité d'un balayage de trame en divisant ladite trame en une pluralité de premiers petits blocs de balayage de trame, chacun étant composé de pixels uniquement de l'un desdits deux balayages de trame de ladite trame et une pluralité de seconds petits blocs de balayage de trame, chacun étant composé de pixels uniquement de l'autre desdits deux balayages de trame de ladite trame, et coder chacun desdits premiers et seconds petits blocs de balayage de trame,

ledit moyen de codage étant sensible audit signal afin de coder chaque dite trame soit par un codage par unité d'une trame, soit par ledit codage par unité d'un balayage de trame et fournir en sortie un signal d'image codé comprenant les trames codées de même que ledit signal.

7. Appareil de codage d'image selon la revendication 6, dans lequel ledit moyen d'évaluation (2) évalue un basculement entre ledit codage par unité d'une trame desdites trames et ledit codage par unité d'un balayage de trame desdites trames lorsque ladite valeur calculée est soit supérieure ou égale, soit plus petite que ladite valeur prédéterminée dans un nombre prédéterminé de trames séquentielles.

8. Appareil de codage d'image selon la revendication 6 ou 7, dans lequel ledit moyen d'évaluation évalue s'il faut exécuter ledit codage par unité d'une trame lorsque ladite valeur calculée est inférieure ou égale à ladite valeur prédéterminée et exécuter ledit codage par unité d'un balayage de trame lorsque ladite valeur calculée est plus petite que ladite valeur prédéterminée.

9. Appareil de codage d'image selon la revendication 8, dans lequel ledit moyen de calcul (1) comprend :

un moyen destiné à diviser chaque dite trame en des petits blocs de trame à deux dimensions comprenant des pixels desdits deux balayages de trame inclus dans ladite trame, et en des paires correspondantes de petits blocs de balayage de trame à deux dimensions comprenant chacun des pixels uniquement d'un premier ou de l'autre desdits deux balayages de trame inclus dans ladite trame,

un moyen destiné à calculer une valeur d'activité de bloc de trame de chacun desdits petits blocs de trame, et une valeur d'activité de bloc de balayage de trame de chacune desdites paires de petits blocs de balayage de trame,

un moyen destiné à déterminer pour chaque trame, un total ($\alpha$) du nombre desdits blocs à deux dimensions pour lesquels ladite activité de bloc de balayage de trame est supérieure à ladite valeur d'activité de bloc de trame, ledit total étant fourni en tant que ladite valeur calculée pour ladite trame.

10. Appareil de codage d'image selon l'une quelconque des revendications 6 à 9, dans lequel ledit codage exécuté par ledit moyen de codage par unité d'une trame comprend l'utilisation d'une compensation du mouvement inter-trames à deux dimensions et ledit codage exécuté par ledit moyen de codage par unité d'un balayage de trame comprend l'utilisation d'une compensation du mouvement inter-balayages de trame à deux dimensions.

11. Procédé de décodage d'image destiné à décoder un signal d'image codé qui a été produit dans un traitement de codage en codant des données d'image composées de trames, chaque trame comprenant deux balayages de trame, le procédé comprenant les étapes consistant à :

extraire un signal dudit signal d'image codé, ledit signal extrait indiquant si les trames dudit signal d'image codé ont été codées par un codage par unité d'une trame en divisant une trame en une pluralité de petits blocs de trame, chacun étant composé de pixels à la fois desdits deux balayages de trame inclus dans ladite trame, et en codant chacun des petits blocs de trame, ou bien codé par un codage par unité de balayage de trame en divisant une trame en une pluralité de premiers petits blocs de balayage de trame, chacun étant composé de pixels d'un seul desdits deux balayages de trame inclus dans ladite trame et une pluralité de seconds petits blocs de balayage de trame, chacun étant composé de pixels, uniquement de l'autre desdits deux balayages de trame inclus dans ladite trame, et coder chacun des premiers et seconds petits blocs de balayage de trame, et

décoder chaque trame dudit signal d'image codé sur un principe trame par trame ou sur un principe balayage de trame par balayage de trame en réponse audit signal extrait.

12. Appareil de décodage d'image destiné à décoder un signal d'image codé qui a été produit dans un traitement de codage en codant des données d'image composées de trames, chaque trame comprenant deux balayages de trame, l'appareil comprenant :

un moyen (139, 6) destiné à extraire un signal à partir dudit signal d'image codé, ledit signal extrait indiquant si les trames dudit signal d'image codé ont été codées par un codage par unité de trame ou en divisant une trame en une pluralité de petits blocs de trame, chacun étant composé de pixels à la fois desdits deux balayages de trame inclus dans ladite trame et en codant chacun des petits blocs de trame, ou bien codées par un codage par unité d'un balayage de trame en divisant une trame en une pluralité de premiers petits blocs de balayage de trame chacun étant composé de pixels d'un seul desdits deux balayages de trame inclus dans ladite trame et une pluralité de seconds petits blocs de balayage de trame, chacun étant composé de pixels, uniquement de l'autre desdits deux balayages de trame inclus dans ladite trame et en codant chacun des premiers et seconds petits blocs de balayage de trame, et
un moyen de décodage (7) destiné à décoder chaque trame dudit signal d'image codé sur un principe trame par trame ou sur un principe balayage de trame par balayage de trame en réponse audit signal extrait.

Fig. 1

Fig. 2

(a)

(b)

Time direction

Vertical direction

1 ○
  2 ●
3 ○
  4 ●
5 ○
  6 ●
7 ○
  8 ●

Field No.    1    2    1    2

Frame No.      t        t+1

Time direction

Vertical direction

1 ○      ○
  1 ●      ●
2 ○      ○
  2 ●      ●
3 ○      ○
  3 ●      ●
4 ○      ○
  4 ●      ●

Field No.    1    2    1    2

Frame No.      t        t+1

Fig. 3

15

Fig. 4

```
                         ○ ◄──────────────────────┐
                         │                         │
              ┌──────────────────┐                 │
              │ Frame block       │                │
              │ activity (Ar),    │                │
              │ field block       │                │
              │ activity (Ai)     │                │
              │ input             │                │
              └──────────────────┘                 │
                         │                          │
                    ╱────────╲          N           │
                  ╱  Ai > Ar   ╲─────────────────┐  │
                   ╲          ╱                  │  │
                     ╲──────╱                    │  │
                         │ Y                      │  │
                  ┌────────────┐                  │  │
                  │ α ← α + 1  │                   │  │
                  └────────────┘                   │  │
                         │                        │  │
                    ╱────────╲         N          │  │
                  ╱ Frame over?╲──────────────────┘  │
                   ╲          ╱                       │
                     ╲──────╱                         │
                         │ Y                          │
             Y      ╱────────╲      N                 │
          ┌────────╱  α ≧ T1   ╲────────┐             │
          │        ╲          ╱         │             │
          │          ╲──────╱           │             │
    ┌───────────┐              ┌───────────┐          │
    │Frame coding│              │Field coding│         │
    │changeover  │              │changeover  │         │
    │output      │              │output      │         │
    └───────────┘              └───────────┘          │
          │                          │                │
          └────────────┬─────────────┘                │
                  ┌──────────┐                         │
                  │  α ← 0   │                          │
                  └──────────┘                          │
                       │
                       ○
```

16

Fig. 5

```
                          ○←─────────────────────┐
                          │                        │
              ┌───────────────────┐                │
              │  Frame block      │                │
              │  activity (Ar),   │                │
              │  field block      │                │
              │  activity (Ai)    │                │
              │  input            │                │
              └───────────────────┘                │
                        │                           │
                   ◇ Ai > Ar ◇──── N ──────────────┤
                        │ Y                          │
                   ┌─────────┐                       │
                   │ α ← α+1 │                       │
                   └─────────┘                       │
                        │                            │
                  ◇ Frame over? ◇─── N ─────────────┤
                        │ Y                           │
                   ◇ α ≧ T1 ◇─── N ──┐                │
                        │ Y           │               │
                   ┌─────────┐        │               │
                   │ β = β+1 │←───────┘               │
                   └─────────┘                        │
                        │                             │
                   ┌─────────┐                        │
                   │ α ← 0   │                        │
                   └─────────┘                        │
                        │                             │
                 ◇ N frames over? ◇─── N ─────────────┘
                        │ Y
          Y ────◇ β ≧ T2 ◇──── N
          │                      │
    ┌───────────────┐    ┌───────────────┐
    │ Frame coding  │    │ Field coding  │
    │ changeover    │    │ changeover    │
    │ output        │    │ output        │
    └───────────────┘    └───────────────┘
          │                      │
          └──────────┬───────────┘
                 ┌─────────┐
                 │ β ← 0   │
                 └─────────┘
                     │
                     ○
```

EP 0 599 529 B1

Fig. 6

Coding circuit 30

18

Fig. 7

Fig. 8

PRIOR ART

Fig. 9

Time direction

Vertical direction

CIF
Frame No. No.    t    t+1    t+2

PRIOR ART

Fig. 10

Time direction

Vertical direction

Field No.    1  2    1  2    1  2

Frame No.
No.         t       t+1      t+2

PRIOR ART

Fig. 11

First field data

Second field data

Vertical direction

Horizontal direction

PRIOR ART

Fig. 12

First field data

Vertical direction

Horizontal direction

Second field data

PRIOR ART